Europäisches Patentamt

European Patent Office

Office européen des brevets

(11) Publication number: **0 318 217 B1**

## EUROPEAN PATENT SPECIFICATION

(45) Date of publication of patent specification: **04.05.94**　(51) Int. Cl.⁵: **C09J 157/02**, C08L 57/02, C08L 53/02, C08L 25/02

(21) Application number: **88310930.8**

(22) Date of filing: **18.11.88**

The file contains technical information submitted
after the application was filed and not included in
this specification

(54) Adhesive formulations.

(30) Priority: **25.11.87 GB 8727636**

(43) Date of publication of application:
**31.05.89 Bulletin 89/22**

(45) Publication of the grant of the patent:
**04.05.94 Bulletin 94/18**

(84) Designated Contracting States:
**AT BE CH DE ES FR GB IT LI LU NL SE**

(56) References cited:
**EP-A- 0 132 291**
**EP-A- 0 260 001**
**US-A- 4 698 242**

(73) Proprietor: **EXXON CHEMICAL PATENTS INC.**
**1900 East Linden Avenue**
**Linden, New Jersey 07036-0710(US)**

(72) Inventor: **Faissat, Michel**
**Avenue Alphonse XIII-60**
**B-1180-Brussels(BE)**
Inventor: **Luvinh, Ouoc**
**Avenue des Eperviers 119**
**B-1150-Brussels(BE)**
Inventor: **Maroie, Serge Moise Jozeph Pierre**
**Rue de l'Astia 26**
**B-6280-Gerpinnes(BE)**

(74) Representative: **Veldhuizen, Albert Dirk Wil-**
**lem et al**
**Exxon Chemical Limited**
**Exxon Chemical Technology Centre**
**PO Box 1**
**Abingdon Oxfordshire OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to new improved adhesive formulations. In particular the invention relates to hot melt pressure sensitive adhesives based on block copolymer rubbers and tackifiers which do not require a processing oil for satisfactory adhesive properties. Hot melt pressure sensitive adhesives generally consist of a block copolymer rubber, a tackifier and a processing oil which provides the desired viscosity to the formulation to allow the adhesive to be spread and develop the desired combination of adhesive properties. United Kingdom 1447419 suggests that certain hydrogenated resins may be used as tackifiers for block copolymer rubbers in hot melt pressure sensitive adhesives without the need for an extender. These resins have not found commercial success in this application.

EP-A-0,132,291 describes copolymers of $C_5$ olefine and diolefine feeds with unsaturated aromatics and terpenes which may be used as tackifiers in adhesive formulations including hot melt adhesives based on block copolymer rubbers containing a processing oil. EP-A-0,260,001 discloses hydrogenated versions of copolymers of the type described in EP-A-0,132,291 which may also be used as tackifiers for adhesives based on block copolymer rubbers providing a processing oil is also present. We have now found that providing these resins have a softening point below 75°C they are particularly useful as tackifiers for block copolymer rubbers without the need for a processing oil.

The present invention therefore provides an adhesive formulation comprising a block copolymer rubber tackified with a resin obtained by copolymerising using a Friedel Crafts catalyst a mixture of :

(i) 5 to 55 wt % of a feed comprising $C_5$ olefines and/or diolefines, and/or $C_6$ olefines and/or diolefines and/or a mixture of $C_5$ and $C_6$ olefines and/or diolefines,
(ii) 5 to 55 wt % of a terpene and
(iii) 3 to 55 wt % of an olefinically unsaturated aromatic compound said mixture containing less than 2 wt % of cyclopentadiene or dicyclopentadiene, said resin having a softening point below 75 °C.

said adhesive formulation containing essentially no oil.

The $C_5$ and/or $C_6$ diolefine and/or olefine containing feed used in the production of the resins used in the adhesive formulation may be obtained from the cracking of petroleum feedstock : such feedstocks include naphthas, kerosene, gas oil and vacuum gas oil. These feedstocks usually boil in a range of from 20°C to 550°C.

The petroleum feedstock is cracked, preferably in the presence of steam, and the recommended cracking temperature is between 500° and 870°C. The product which contains unsaturated hydrocarbons usually boiling in the range of 20° to 240°C, preferably 20° to 130°C, generally is thereafter subjected to fractionation to remove $C_2$ to $C_4$ light ends. If the feedstock contains large amounts of cyclopentadiene it should be subjected to thermal soaking at a temperature between 100°C and 160°C, preferably 120° to 140°C, e.g. at about 130°C. The thermal soaking preferably takes 0.5 to 6 hours, e.g. 0.5 to 3 hours to reduce the level of cyclopentadiene or dicyclopentadiene to below 2 wt.%. Low temperature heat soaking is preferred in order to limit the cyclic diene (Cyclopentadiene and Methylcyclopentadiene) co-dimerisation with $C_5$ linear conjugated dienes (isoprene and pentadienes 1,3 cis- and trans-). After fractionation and, if carried out, thermal soaking, the feedstock is preferably subjected to distillation to remove cyclic conjugated diolefines which are gel precursors (cyclopentadiene and methyl-cyclopentadiene being removed as dimers).

After distillation one obtains an overhead naphtha which usually boils in the range from 15 to 110°C, e.g. 25 to 80°C, the best results being achieved with a 25-70°C cut. This overhead naphtha comprises mainly $C_5$ diolefines such as isoprene and 1,3 cis-and trans- pentadienes (piperylene), $C_5$ to $C_6$ mon-oolefines and aromatics for example benzene. In general the overhead naphthas have the following compositions:

|  | % by weight |
| --- | --- |
| Total paraffins | 1.0 to 41.5 |
| Total diolefines | 50.0 to 14.5 |
| Total olefines | 33.5 to 13.0 |
| Total aromatics | 20.0 to 35.0 |
| Isoprene | 16.5 to 6.5 |
| Pentadiene 1,3 | 15.5 to 4.5 |

The exact composition depending on the nature of the petroleum feedstock which is subjected to steam cracking. Cyclopentene contents are generally below 3.0 wt.%. These feeds contain minerals such as

EP 0 318 217 B1

paraffins and aromatics which are not polymerised during the process of the invention and it is emphasised that these materials are not considered to be part of the reaction mixture for the purposes of this invention.

The feed could be significantly isoprene free provided this compound is previously recovered through any conventional separation process such as distillation, extractive distillation or azeotropic distillation. In this case the feed may be a narrow fraction pentadiene 1,3 concentrate. A typical such composition contains less than 5 wt.% preferably less than 2 wt.% isoprene, from 25 to 80 wt.% pentadiene 1,3 (cis and trans isomer). Other $C_5$ and/or $C_6$ olefines, and/or diolefines making up the remainders generally cyclopentene typically 75 to 10 wt.%.

The $C_5/C_6$ feed comprises 5 to 55 wt.% of the total unsaturated materials used in the production of the resin. We prefer to use from 10 to 30 wt.% of this feed.

The terpene feed used in the production of the resin may be $\alpha$-pinene, $\beta$-pinene, carene, limonene or other readily available terpinous materials, alpha pinene and limonene being preferred. The material may be pure or the commercially available concentrates such as gum terpentine or alpha pinene concentrates may be used which tend to be mixture of various terpinous materials. For example a suitable feed contains from about 70 to 90 wt.% alpha pinene the remainder being other terpenes. Limonene streams are available containing above 50 wt.% generally 50 to 70 wt.% limonene and carene streams are available containing from 50 to 85 wt.% $\Delta$ -3 carene. These are typical streams useful in the present invention. Where limonene is used it is preferred that the $C_5/C_6$ unsaturated feed contain a high proportion of olefines since if large amounts of diolefines are present the molecular weight of the product tends to be too high with reduction in adhesive properties and compatibility preferably the $C_5/C_6$ feed contains at least 10 wt.% more preferably at least 20 wt.% of olefines. We prefer to use from 15 to 35 wt.% of the terpene.

The olefinically unsaturated aromatic compounds used in producing the resin may also be used in its pure form or a mixtures of unsaturated aromatics such as those available from the cracking of petroleum materials. Examples of suitable unsaturated aromatics include styrene, alpha methyl styrene, indene and vinyl toluene and mixtures thereof. Hereagain where mixtures are used reference to the percentage is to the amount of unsaturated polymerisable aromatic material based on the total weight of unsaturated material fed to the reactor. We prefer to use from 10 to 45 wt.% of the unsaturated aromatic compound.

We have found that using the three ingredients of the stream in the proportions proposed leads to significantly improved resin properties. When unsaturated aromatics such as styrene are copolymerised with $C_5$ feeds the result is an undesirable lowering of the softening point of the resin although an improvement in adhesive properties is achieved. We have found however that if the terpene is also included the improvement in the adhesive properties may be retained without the dramatic reduction in softening point. Such improved adhesion has been found to enable the tackification of hitherto difficult to tackify block copolymer rubbers such as the commercially available product styrene/butadiene, styrene/butadiene/styrene, styrene/isoprene, styrene/isoprene/styrene rubbers such as Cariflex (Registered Trade Mark) 1011 Kraton and Europrene rubbers.

Agents to narrow the molecular weight distribution may be employed in the production of the resins used in this invention for example the branched chain reactive aliphatic olefines of our GB patent 1538057 may be used to achieve narrow distribution. These olefines may make up part of the $C_5/C_6$ feed and the ratios of the amount of feed to the amount of branched olefines used may be varied to obtain resins of the desired softening point. Where branched olefins are used a broad (e.g. $C_5$-$C_8$) fraction of our U.K. patent 1538057 may be used. The preferred branched chain reactive aliphatic olefines are oligomers of propylene and butylenes obtained with phosphoric acid catalysts or from a Fluid Catalytic Cracker.

Other chain transfer agents such as the alkyl halides of our U.K. Patent 1537852 may also be used optionally as part of the catalyst system.

Similarly oxygenated transfer agents may be used such as mono-, di- or tri-substituted phenols the substituent being a $C_1$ to $C_{30}$ or preferably $C_1$ to $C_6$ straight chain or branched chain hydrocarbyl group e.g. methyl, ethyl, propyl, butyl, amyl or their secondary or tertiary isomers, (e.g. anisole), organic acids or anhydrides (e.g. maleic anhydride). When used the oxygenated transfer agent should preferably have a boiling point lower than 300°C. If low boiling point compounds e.g. diethyl ether, are used the polymerisation temperature and pressure should be carefully chosen so as to maintain them in the liquid state.

The most efficient compounds in the presence of $AlCl_3$ are dialkyl ethers or an alkaryl ether, such as anisole since they act as solvents for the catalysts. Since the polymerisation is usually carried out between 30 to 80°C, any such additive should be of adequate boiling point in order to maintain it in the liquid phase.

The amount of oxygenated compound used as transfer agent can vary from 0.1 to 5 wt.%, preferably 0.5 to 2 wt.%, based on the weight of petroleum resin feed. They are generally less attractive than the branched chain reactive aliphatic olefines previously described.

3

The feeds are mixed and polymerized using a Friedel Crafts catalyst, for example aluminium chloride, aluminium bromide or an aluminium chloride/hydrochloric acid/aromatic hydrocarbon complex or aluminium chloride/alkyl halide/aromatic hydrocarbon complex, the aromatic hydrocarbon being preferably alkyl substituted for example 0-xylene, mesitylene, ethyl benzene, isopropyl benzene and other short or long chain mono-, di- or tri- alkyl benzenes are especially suitable. The alkyl chain can be linear to branched and can vary from 1 to 30 carbon atoms.

Acid liquid $AlCl_3$ sludges obtained as by-products during the alkylation of benzene or any other substituted aromatics (e.g. toluene or xylenes) with branched chain olefins can be directly used as catalyst for the above described polymerisation process. The branched chain olefins which are for example, produced via the boron trifluoride oligomerisation of propylene and fractionation, e.g. $C_{12}$ olefins or $C_{24}$ olefins, can be alkylated with aromatics producing in situ sludge. As an example the acidic sludge available from a dodecylbenzene plant provided similar results to the preformed 0-xylene $AlCl_3$/HCl liquid complex sludges from other substituted branched or straight chain aromatic production for example, meta and/or para diisopropyl benzenes and para-tertiary butyl benzene may also be used.

These liquid complexes are slightly more efficient than $AlCl_3$ powder at equivalent concentration and provide slightly higher resin yields and lower resin molecular weight.

In the polymerisation process the amount of catalyst may vary from 0.25 to 3.0 wt.% preferably 0.5 to 1.5 wt.% based on the weight of the mixture to be polymerized. The optimum concentration depends on the nature of the solvent which affects the solubility of the catalyst as well as on the stirring efficiency inside the polymerisation reactor.

Other Friedel Crafts catalysts like titanium tri- or tetrachloride, tin tetrachloride, boron trifluoride, boron trifluoride complexes with organic ethers, phenols or acids can also be used but they lead to rather low resin yields and large quantities of liquid oligomers of low value are obtained. Even though these oily oligomers can be upgraded as reactive plasticiser or liquid plasticiser such catalysts are not recommended. Other possible catalysts can be acidic clays.

Usual polymerisation temperatures are between -20°C and 100°C, preferably between 30° and 80°C, we find that if lower temperatures are used the resin colour is improved although there can be a reduction in yield.

After polymerisation the residual catalyst may be removed by for example washing with aqueous solution of alkali, ammonia or sodium carbonate, or by the addition of an alcohol such as methanol and subsequent filtration.

The final resin may be stripped of unreacted hydrocarbons ("raffinate" rich in benzene and/or paraffins/unreactive olefins) and low molecular weight oligomers by steam stripping or vacuum distillation.

The resins comprise copolymers containing from 3 to 55 wt.% of units derived from an olefinically unsaturated aromatic compound from 5 to 55 wt.% of units derived from $C_5$ olefines and/or diolefines and/or $C_6$ olefines and/or diolefines or a mixture of $C_5$ and $C_6$ olefines and/or diolefines - and from 5 to 55 wt.% of units derived from a terpene.

The amount of unsaturated aromatic present may readily be determined by proton NMR although it is difficult to determine accurately the exact amount of the other two components present.

The resins prepared as described above contain both aromatic and aliphatic unsaturation which may be reduced by hydrogenation to improve resin colour and colour stability. It is preferred however that for compatibility with the block copolymer rubber at least 20% of the aromatic unsaturation remains after hydrogenation. Any suitable technique which removes the aliphatic unsaturation and leads to the required degree of hydrogenation of the aromaticity in the resin may be used.

The hydrogenation may be batch or continuous. Typical examples of catalysts include nickel, palladium, platinum and molybdenum sulphide Ni-W, Ni-Mo, Co-Mo catalysts with a preferred catalyst being a pre-activated catalyst on a support such as alumina, kieselguhr, activated charcoal, silica, silica alumina and titania.

Before carrying out hydrogenation, the resin is preferably dissolved in a saturated hydrocarbon solvent. Typical batch hydrogenation takes place at a temperature of 100°C to 260°C and for preference from 120°C to 200°C, at a pressure of 1.01 to 12.1 MPa (10 to 120 atmospheres), and for preference, from 2.02 to 9.12 MPa (20 to 90 atmospheres) for a period of 5 to 16 hours. Typical catalysts are nickel, palladium, platinum deposited on an inert support like alumino or silica. Suitable proportions of catalysts are from 0.5 to 15 wt.%, and for preference from 1 to 10 wt.%, in relation to the resin. After filtering off the catalyst, the solvent is removed by distillation and recovered for recycling.

We prefer, however, to use a continuous hydrogenation process in which a solution of the resin in a suitable hydrocarbon solvent is passed with an excess of hydrogen or hydrogen rich gas over a catalyst, preferably Ni-W, Ni-Mo or Co-Mo catalyst on a gamma alumina support, such as described in our European Patents 0046634 and 0082726. Typically, the preferred Ni-W or Ni-Mo have a specific fresh surface area ranging from 120 to 300 $m^2$/g and containing from 2 to 10% weight nickel and from 10 to 25% by weight tungsten, or from 2 to 10% by weight nickel and from 10 to 25% by weight molybdenum or from 2 to 4% by weight cobalt and from 1o to 15% by weight molybdenum wherein the catalyst support has (preferably) pores or channels having radii in the range of $10^{-7}$ to $75.10^{-7}$ m (1000 to 75000 A) comprising at least 10% of the total pore volume. The preferred components are nickel and tungsten on a gamma alumina support. The concentration of metals on the catalyst is important for good performance and ranges from 2 to 10, preferably 4 to 5, wt.% nickel and from 10 to 25, preferably 16 to 20, wt.% tungsten.

Typical conditions are:

1) resin dilution typically from 1o to 50 wt.% in a suitable hydrocarbon solvent such as Exsol D40 or Varsol 40;

2) liquid space velocity (VVH: volume of feed per volume of catalyst per hour) typically from 0.1 to 5, preferably 0.5 to 3;

3) gas ratio at reactor outlet (volume of hydrogen per volume of feed) between 50 and 300, most generally around 200;

4) reaction temperature selected from 180°C to 350°C, preferably 200 to 320°C;

5) reactor is a trickle bed type, operated either upflow or downflow;

6) hydrogen pressure from 2.03 to 25.3 MPa (20 to 250 atmospheres), preferably from 4.06 to 18.2 MPa (40 and 180 atm.) especially below 15.2 MPa (150 atmospheres).

The typical hydrogenation/decolourisation conditions specified above are exemplary of those useful for commercial practice, but should not be considered restrictive. As hydrogen partial pressure and total pressure are increased, one would expect the values of the other process variables to change, for a given finished resin colour. For example, temperature might be lowered, or feed resins concentrations increased, or reactor space velocity may be increased. Alternatively, pressure and/or temperature may be increased as a means of reducing finished resin colour and/or residual unsaturation as measured by bromide number of bromine index. They may also be varied to control the aromatic content of the resins. It has been found that pressures in excess of 12.1 MPa (120 atmospheres) as taught in U.K. Specification No. 1,202,802 are required for substantial reduction in residual resin unsaturation and/or heat stability.

After hydrotreating, the mixture from the reactor may be flashed and further separated to recover the solvent and hydrogen for recycle and to recover the hydrogenated resin. The solution is flashed and/or distilled in an oxygen-free or minimum oxygen atmosphere to eliminate the solvent, and thereafter, may be steam distilled to eliminate the possible light oily polymers of low molecular weight, known in the trade by name of "fill", preferably with care not to raise the temperature of the resin above 325°C to avoid degrading the colour and other properties of the finished resin.

The liquid polymeric resin is cast and crushed after cooling. Alternatively, it may be pastillated, prilled or flaked.

Resins are thus obtained having a Gardner colour in the region of 1 to 3 down to a Saybolt colour of 30+, a ball-ring softening point of about 50 to 150°C and a high degree of tackiness. These properties, together with other such as brilliance, compatibility with other resins, and solubility in usual solvents, enable them to be used in making many products used by the most varied industries; viz. adhesives of all kinds, varnishes and paints, and for the treatment of cellulose materials.

Hydrogenation improves the colour and the heat stability of the resin by removing the cromophores and reducing the olefinic unsaturation which is preferably reduced to below 0.02 double bonds per 100 grams of resin as measured by reacting the resin with metachloroperbenzoic acid. In this method, 0.1 grams of the resin is dissolved in 10 g toluene and treated with an excess of a freshly standardized ethylacetate solution of metachloroperbenzoic acid and allowed to stand overnight in the dark at room temperature. On the following day, an excess of potassium iodide solution is added to react with the unreacted metachlorideperbenzoic acid and the iodine liberated by the excess peracid is determined by back titration with sodium thiosulphate solution. The amount of peracid reaction gives the double bond content of the resin. A blank is run concurrently to determine the extent of peracid decomposition whilst standing overnight.

The hydrogenation may also reduce the aromatic content which may readily be determined by proton NMR, for example, the hydrogenation reduces the aromatic content to between 3 to 75 % of the aromatic content of the unhydrogenated resin. Low viscosity may be obtained without oil and at the same time a good tackification is achieved.

The present invention is illustrated but in no way limited by reference to the following examples in which the following feeds are used :

| α-pinene concentrate | |
|---|---|
| wt % | |
| α-pinene | 90.34 |
| Camphene | 4.19 |
| β-pinene | 0.21 |
| Δ-3 carene | 0.11 |
| β-terpinene | 0.67 |
| ρ-cymene | 0 |
| Limonene | 2 |
| α-terpinene | 0.34 |
| Terpinolene | 0.87 |
| 2,4,8-mentadiene | 0.11 |
| Unknown | 1.16 |
| Total polymerisable | 98.84 |

<u>Carene Concentrate</u>

<u>G.C. Analysis</u>

<u>Wt. %</u>

| | |
|---|---|
| $\alpha$ -pinene | 4.01 |
| Camphene | 1.67 |
| $\beta$ -pinene | 12.36 |
| $\triangle$ -3 carene | 60.82 |
| $\alpha$ -terpinene | 1.57 |
| $\rho$ -cymene | 1.73 |
| Limonene | 9.05 |
| $\beta$ -terpinene | 0.76 |
| Terpinolene | 1.75 |
| 2,4,8-mentadiene | 0.16 |

<u>Piperylene Concentrate</u>

| | |
|---|---|
| Isoprene | 1.17 |
| Pentene-2 trans. | 1.6 |
| Pentene-2 cis. | 3.45 |
| 2 Me-butene-2 | 3.59 |
| Pentadiene 1,3 trans. | 43.36 |
| CPD | 0.59 |
| Pentadiene 1,3 cis. | 23.55 |
| 1,2 dimethylbutane | 0.38 |
| Cyclopentane | 14.99 |
| 4 methylpentene-1 ) | |
| ) | 0.56 |
| 3 methylpentene-1 ) | |
| 3 methylpentadiene 1,4 ) | |
| 4 methylpentadiene-2 cis.) | 0.17 |
| 2,3 dimethylbutene-1 ) | |
| Cyclopentane | 1.58 |
| 4 methylpentene 2 | 0.06 |
| 2 methylpentane | 0.22 |
| 3 methylpentane | 0.03 |

The concentrates described above were mixed with pure vinyl aromatic compound and a paraffinic solvent in the proportions set out in the following Table 1. The mixture was then polymerised at 50 ° C using 1 wt.% AlCl₃ as catalyst. The conditions used were as follows:

The reaction mixture (as described in Table 1) was fed to a 2 litres glass reactor which was fitted with a mechanical stirrer, a cooler and a catalyst injection device. 1 wt.% of powdered AlCl₃ as catalyst based on the total weight of the feed was injected into the reactor which was then held at 50° 60°C for 90 minutes. An ammonia solution was added to stop the reaction after the desired reaction time. The resin was then obtained after steam stripping at 250°C under nitrogen atmosphere.

The solvent used contains:

| paraffins | 97 wt.% |
|---|---|
| aromatics | 0.5 wt.% |
| diolefins, olefins | balance |

Resins were hydrogenated in an adiabatic continuous tubular trickle bed reactor operated in the downflow mode and also in a batch autoclave.

If the resins are hydrogenated in the tubular trickle batch reactor hydrocarbon resin is dissolved in Exsol D40, at 30 wt.% resin and then hydrogenated using a hydrogen pressure of 18.2 MPa (180 atmospheres), a liquid space velocity (VVH) of 1.5, a ratio of volume of gas at reactor exit of 200 volume of hydrogen to resin solution with a reactor inlet temperature between 215°C and 230°C using NT555 E (wide pore size distribution, 1.6 mm (1/16 inch) extrudate) catalyst purchased from Katalco in the inactive nickel oxide tungsten trioxide on γ-alumina form which is converted to the catalytically active form by sulphidation. Sulphur is added in Varsol 40 either as carbon disulphide or dimethyl disulphide, the hydrogen pressure during the activation being in the range of 2.02 - 4.05 MPa (20-40 atm). The initial temperature is 200°C for removal of adsorbed water, which is then raised to 300-350°C and kept for 39 hours.

In the Examples, the olefinic unsaturation of the resins was measured by the peracid treatment process previously described.

EXAMPLES

Resins were made using the wt.% of the feeds set out below.

| Resin Reference | Wt.% of feed | | | | | | |
|---|---|---|---|---|---|---|---|
| | A | B | C | D | E | F | G |
| Carene | | 10 | | | | | |
| α-pinene | 15 | | 10 | 25 | 36 | 31 | 31 |
| Piperylene | 30 | 30 | 30 | 30 | 22 | 24 | 19 |
| Paramethylstyrene | | | | | 17 | 20 | |
| Styrene | 15 | 15 | 20 | 20 | | | 30 |
| LVN[1] | | | | | 25 | 20 | 20 |
| HOP[2] olefins | 40 | 45 | 40 | 25 | | | |
| $C_5$ olefins | | | | | | 5 | |
| **Resin Properties** | | | | | | | |
| Resin yield | 45 | 44 | 50 | 54 | 48 | 53 | 58 |
| Fill yield | 20.5 | 18.5 | 16.5 | 20 | 14.5 | 12 | 12 |
| Softening point (°C) | 71 | 60.5 | 60 | 79.5 | 112 | 106.5 | 94.5 |
| Gardner colour | 3 | 3 | 3 | 3 | 3 | 3 | 3.5 |
| Wax cloud point | 88 | 88 | 86 | 88 | 89 | 88 | 88 |
| $M_n$ (GPC) | 720 | 720 | 690 | 730 | 850 | 670 | 750 |
| $M_w$ | 1260 | 1290 | 1220 | 1400 | 1870 | 1790 | 1750 |
| Aromatic content(NMR) | 23 | 23.5 | 34.5 | 30.5 | 24 | 25.5 | 42 |
| Sulfur (ppm) | <10 | 8 | 1 | 8 | 24 | 32 | 30 |
| Chlorine (ppm) | 150 | 200 | 110 | 220 | 100 | 110 | 50 |
| **Heat stability (Gardner)** | | | | | | | |
| 3 hours 150°C | 5.5 | | | | 4 | 4 | 5 + |
| 16 hours 150°C | | | | | 7.5 | 8 | 8.5 |

1. LVN - Light virgin naphtha.
2. HOP - Branch chain olefins, e.g. mainly $C_5$-$C_7$ oligomers.

The resins A,E,F and G here hydrogenated using the general conditions set out above to give the following resins :

| Resin Reference | | AH1 | AH2 | AH3 | EH1 | EH2 | FH1 | FH2 | GH1 | GH2 |
|---|---|---|---|---|---|---|---|---|---|---|
| Resin, wt% | before H2 | 30 | 30 | 30 | 30 | 30 | 30 | 30 | 30 | 30 |
| | after H2 | 29.5 | 28.5 | 30 | 29.3 | 28.9 | 29.4 | 28.5 | 29 | 30 |
| Resin yield | | 98 | 95 | 100 | 97.5 | 96 | 98 | 95 | 96.5 | 100 |
| Softening Point (°C) | | 65 | 67 | 71.5 | 103 | 106.5 | 96.5 | 100 | 95 | 100 |
| Colour, Saybolt | | 30 | 30 | 28 | 30 | 30 | 30 | 30 | 30 | 30 |
| Wax cloud point | | 88 | 88 | 89 | 89 | 89 | 89 | 89 | 89 | 88 |
| $M_n$ (GPC) | | 840 | | | 830 | 850 | 780 | 820 | 790 | |
| $M_w$ | | 1080 | | | 1680 | 1690 | 1610 | 1650 | 1690 | |
| Aromatic content (NMR) | | 18.5 | | 18.5 | 22 | 22 | 22 | 22 | 30 | 31 |
| Sulfur (ppm) | | 5 | | <1 | <1 | <1 | <1 | <1 | ≦10 | 1 |
| Chlorine (ppm) | | 14 | | 9 | 9 | 15 | 12 | 3 | 3 | 2 |
| Heat stability 175°C | | 2 | 2 + | - | 2.5 | 2 | 3.5 | 3 | <1 | - |

The resins were then used to tackify the styrene/butadiene/styrene block copolymer rubber Cariflex TR1102 in the adhesive formulations shown which had the properties given in the following table

The following test methods are used in these Examples

The Ball Tack is measured by the PSTC-6 Test.

180° Peel Strength is measured by the PSTC-1 Test

The Loop Tack is measured by the FINAT-9 Test

The Viscosity is measured by the ASTM D-3236 Test.

The Hot Shear is measured by suspending a 1000 gram weight of a 25 millimeter wide strip of Mylar coated with the adhesive formulation which is adhered to a stainless steel plate with a contact area of 12.5 mm x 25 mm.

The sample is placed in a ventilated oven at 40°C whose temperature is increased every 30 minutes by 10°C until stress failure occurs and the temperature of failure and the time at that temperature to failure are recorded.

Resin AH1, AH2, AH3 are suitable for use according to this invention, the others are for comparative purposes.

The Shear Adhesion Failure Temperature is determined by using the formulation to adhere a 2.54 cms X 1.27 cms polyethylene strip to stainless steel, hanging the samples in an oven held at 25°C and suspending a 500 gram weight from the bottom of the strip. The temperature is raised at 0.4°C/min and the bond failure temperature is measured. The Shear Adhesion Failure Temperature is the average of three tests.

The Peel Adhesion Failure temperature is determined by using the formulation to adhere a 2.84 cm X 7 cm polyethylene strip to stainless steel, hanging the samples in an oven, held at 25°C and suspending a 100 g weight from the free end of the bond in the 180° peel mode.

The temperature is raised at 0.4°C/min and the failure temperature is measured.

The Peel Adhesion Failure Temperature is the average of three readings.

| PROPERTIES | TR 1102 100 / Resin N12 125 / Irganox 1010 2.5 | TR 1102 100 / Resin E 125 / Flexon 876 25 / ZDBC 2.5 / Irganox 1076 0.5 | TR 1102 100 / Resin B12 125 / Primol 352 25 / Irganox 1010 2.5 | TR 1102 100 / Resin F 125 / Flexon 876 25 / ZDBC 2.5 / Irganox 1076 0.5 | TR 1102 100 / Resin G 125 / Flexon 876 25 / ZDBC 2.5 / Irganox 0.5 | TR 1102 100 / Resin Gil 125 / Primol 352 25 / Irganox 1010 2.5 | TR 1102 100 / Resin G 125 / Irganox 1010 2.5 |
|---|---|---|---|---|---|---|---|
| Viscosity at 175°C, mPas | 43 600 | 34 500 | 46 500 | 34 500 | 33 000 | 40 000 | 102 000 |
| Rolling ball tack, cm | 1.5 | 2 | 2 | 2 | 2.5 | 1.5 | >30 |
| 180° Peel Adhesion, g/cm | 400 | 610 | 600 | 605 | 500 | 540 | — |
| Loop tack, N/25mm (N/inch) | 13 | 15 | 16.5 | 17.5 | 12 | 15 | — |
| Hot shear, °C/min. | 80/14 | 70/16 | 80/6 | 70/16 | 60/6 | 70/20 | — |
| SAFT, °C | 90 | — | 85 | — | — | 79 | — |
| Aromatic content, % (NMR) | 18.5 | 24 | 21 | 25.5 | 42 | 30 | — |

Irganox 1010 is an antioxidant

and Flexon 876 and Primol 352 are processing oils.

The first formulation is according to the invention; the others are for comparative purposes. The second through to sixth contain oil; the final formulation illustrates the effect of oil omission with unsuitable resins.

Similar tests were carried out for Tackification of the Block Copolymer Rubber Stereon 840A

| FORMULATIONS PROPERTIES | Stereon 840A 100 Resin A 125 Irganox 1010 2.5 | Stereon 840A 100 Resin AH2 125 Irganox 1010 2.5 | Stereon 840A 100 Resin G 125 Primol 352 25 Irganox 1010 2.5 | Stereon 840A 100 Resin GH1 125 Primol 352 25 Irganox 1010 2.5 | Stereon 840A 100 Resin EH2 125 Primol 352 25 Irganox 1010 2.5 |
|---|---|---|---|---|---|
| Viscosity at 175°C, mPas | 32 750 | 31 000 | 19 300 | 19 500 | 21 000 |
| Rolling ball tack, cm | 1.5 - 2 | 2.5 - 3 | 8 | 2 | 4 |
| 180° Peel Adhesion, g/cm | 720 | 680 | 1000 | 640 | 820 |
| Loop tack, N/25mm (N/inch) | 22 | 18 | 36 | 22 | 23 |
| Hot shear, °C/min. | 70/30 | 70/12 | 60/16 | 70/14 | 70/30 |
| SAFT, °C | 86 | 87 | 74 | 81 | 86 |
| Aromatic content, % (NMR) | 23 | 18.5 | 40 | 30 | 21 |

Further tests were made to tackify the block copolymer Cariflex TR 1101

12

|  | a | c | h |
|---|---|---|---|
| Cariflex TR 1101 | 100 | 100 | 100 |
| Resin A | - | - | 150 |
| Resin G | 125 | 125 | - |
| Flexon 876 | 25 | - | - |
| Antioxidant | 1.5 | 1.5 | 1.5 |
| Viscosity, MPas at 175°C | 190000 | 483000 | 142000 |
| Softening Point, °C | 131 | - | 138 |
| Rolling Ball Tack | 3 | 30 | 0.5 |
| Loop Tack, N/25 mm | 16 | 21.5 | 14 |
| 180° Peel Adhesion, g/cm | 540 | - | 500 |
| S.A.F.T., °C | 96 | - | 98 |
| Hot Shear, mn at °C | 9/80 | - | 24/80 |
| Hot Shear at 70°C, hours | 170 | 200 | 157 |
| P.A.F.T., °C | 56 | - | 57 |

Tests a and c are for comparison; test h is according to the invention.

Similar tests were carried out to tackify a Development SBS block-copolymer - B - 40/60 wt% styrene/Butadiene

|  | a | d | i |
|---|---|---|---|
| DEV SBS Block Cop B | 100 | 100 | 115 |
| Resin F | 125 | - | - |
| Resin A | - | 125 | 110 |
| Flexon 876 | 25 | - | - |
| Antioxidant | 1.5 | 1.5 | 1.5 |
| Viscosity, MPas at 175°C | 13900 | 10300 | 16800 |
| Softening Point, °C | 96 | 95.5 | 102 |
| Rolling Ball Tack | >30 | 3 | 4 |
| Loop Tack, N/25 mm | 18 | 20 | 12.5 |
| 180° Peel Adhesion, g/cm | 720 | 600 | 440 |
| S.A.F.T., °C | 78 | 76 | 81 |
| Hot Shear, mn at °C | 15/70 | 8/70 | 18/70 |
| Hot Shear at 70°C, hours | 0.7 | 0.6 | 0.8 |
| P.A.F.T., °C | 74 | 72 | 78 |

Test a is for comparison; test d and i are according to the invention

Tests were made on another Development SBS Block Copolymer - C - containing 43/57 wt% Styrene/Butadiene

|  | a | c |
|---|---|---|
| DEV SBS Block Cop C | 35 | 40 |
| Resin F | 55 | - |
| Resin A | - | 60 |
| Primol 352 | 10 | - |
| Antioxidant | 0.6 | 0.6 |
| Viscosity, MPas at 175°C | 25300 | 30300 |
| Softening Point, °C | 106 | 101 |
| Rolling Ball Tack | >30 | 1 |
| Loop Tack, N/25 mm | 14 | 23 |
| 180° Peel Adhesion, g/cm | 760 | 660 |
| S.A.F.T., °C | 78 | 78 |
| Hot Shear, mn at °C | 10/70 | 5/70 |
| Hot Shear at 70°C, hours | 1.25 | 0.65 |
| P.A.F.T., °C | 78 | 75 |

Test c is according to the invention.

Further tests were made to tackify Kraton D 1111

|  | c | i |
|---|---|---|
| Kraton D 1111 | 100 | 100 |
| Resin G | 75 | - |
| Escorez 1401 | 50 | - |
| Resin F | - | - |
| Resin A | - | 125 |
| Flexon 876 | - | - |
| Antioxidant | 1.5 | 1.5 |
| Viscosity, MPas at 175°C | 290000 | 93000 |
| Softening Point, °C | - | 128 |
| Rolling Ball Tack | >30 | 0.5 |
| Loop Tack, N/25 mm | 32 | 14 |
| 180° Peel Adhesion, g/cm | - | 500 |
| S.A.F.T., °C | - | 93 |
| Hot Shear, mn at °C | - | 19/70 |
| Hot Shear at 70°C, hours | 68 | 10 |
| P.A.F.T., °C | - | 79 |

Test i is according to the invention.

## Claims

1. An adhesive formulation comprising a block copolymer rubber tackified with a resin obtained by copolymerising using a Friedel Crafts catalyst a mixture of :
   (i) 5 to 55 wt % of a feed comprising $C_5$ olefines and/or diolefnes, and/or $C_6$ olefines and /or diolefins and/or a mixture of $C_5$ and $C_6$ olefines and/or diolefines,
   (ii) 5 to 55 wt % of a terpene and
   (iii) 3 to 55 wt % of an olefinicallly unsaturated aromatic compound said mixture containing less than 2 wt % of cyclopentadiene or dicyclopentadiene, said resin having a softening point below 75°C; said adhesive formulation containing essentially no oil.

2. An adhesive formulation according to claim 1 in which the resin is hydrogenated.

14

3. An adhesive formulation according to claim 1 in which the block copolymer is styrene / butadiene, styrene / butadiene / styrene, styrene / isoprene, styrene / isoprene / styrene rubber or any other block copolymer consisting substantially of styrene and isoprene and / or butadiene blocks.

**Patentansprüche**

1. Klebemittelformulierung, die einen Blockcopolymerkautschuk umfaßt, der mit einem Harz klebrig gemacht worden ist, das durch Copolymerisieren unter Verwendung eines Friedel-Crafts-Katalysators von einer Mischung aus

(i) 5 bis 55 Gew.% eines Einsatzmaterials, das $C_5$-Olefine und/oder -Diolefine und/oder $C_6$-Olefine und/oder -Diolefine und/oder eine Mischung aus $C_5$- und $C_6$-Olefinen und/oder -Diolefinen umfaßt,
(ii) 5 bis 55 Gew.% Terpen und
(iii) 3 bis 55 Gew.% einer olefinisch ungesättigten aromatischen Verbindung erhalten worden ist, wobei die Mischung weniger als 2 Gew.% Cyclopentadien oder Dicyclopentadien umfaßt und das Harz einen Erweichungspunkt unter 75°C aufweist, und
die Klebemittelformulierung im wesentlichen kein Öl enthält.

2. Klebemittelformulierung nach Anspruch 1, bei der das Harz hydriert ist.

3. Klebemittelformulierung nach Anspruch 1, bei der das Blockcopolymer Styrol/Butadien-, Styrol/Butadien/Styrol-, Styrol/Isopren-, Styrol/Isopren/Styrolkautschuk oder ein beliebiges anderes Blockcopolymer ist, das im wesentlichen aus Styrol- und Isopren- und/oder Butadienblöcken besteht.

**Revendications**

1. Formulation d'adhésif comprenant un caoutchouc copolymérique séquencé rendu adhésif avec une résine obtenue par copolymérisation, au moyen d'un catalyseur de Friedel Crafts, d'un mélange :

(i) de 5 à 55 % en poids d'une charge comprenant des oléfines et/ou dioléfines en $C_5$, et/ou des oléfines et/ou dioléfines en $C_6$, et/ou un mélange d'oléfines et/ou dioléfines en $C_5$ et $C_6$,
(ii) de 5 à 55 % en poids d'un terpène, et
(iii) de 3 à 55 % en poids d'un composé aromatique à insaturation oléfinique, ledit mélange contenant moins de 2 % en poids de cyclopentadiène ou dicyclopentadiène, ladite résine possédant un point de ramollissement inférieur à 75°C ;
ladite formulation d'adhésif ne contenant pratiquement pas d'huile.

2. Formulation d'adhésif suivant la revendication 1, dans laquelle la résine est hydrogénée.

3. Formulation d'adhésif suivant la revendication 1, dans laquelle le copolymère séquencé est un caoutchouc styrène/butadiène, styrène/butadiène/styrène, styrène/isoprène, styrène/isoprène/styrène ou n'importe quel autre copolymère séquencé consistant essentiellement en blocs styrène et isoprène et/ou butadiène.